(19) Europäisches Patentamt
European Patent Office
Office européen des brevets

(11) Veröffentlichungsnummer: **0 106 101**
**B1**

(12) # EUROPÄISCHE PATENTSCHRIFT

(45) Veröffentlichungstag der Patentschrift: **15.07.87**

(21) Anmeldenummer: **83108693.9**

(22) Anmeldetag: **03.09.83**

(51) Int. Cl.4: **C 08 J 9/00**, C 08 L 75/04, C 08 G 18/14 // (C08L75/04, 83:12)

(54) **Verfahren zur Herstellung hochelastischer kalthärtender Polyurethanschaumstoffe.**

(30) Priorität: **17.09.82 DE 3234462**

(43) Veröffentlichungstag der Anmeldung: **25.04.84 Patentblatt 84/17**

(45) Bekanntmachung des Hinweises auf die Patenterteilung: **15.07.87 Patentblatt 87/29**

(84) Benannte Vertragsstaaten: **BE DE FR GB IT NL**

(56) Entgegenhaltungen:
**DE - A - 2 728 031**
**FR - A - 2 250 781**
**FR - A - 2 287 481**

(73) Patentinhaber: **Th. Goldschmidt AG, Goldschmidtstrasse 100 Postfach 101461, D-4300 Essen 1 (DE)**

(72) Erfinder: **Klietsch, Bernd-Jürgen, Schweidnitzerstrasse 15, D-4660 Gelsenkirchen-Buer (DE)**
Erfinder: **Kollmeier, Hans-Joachim, Dr., Barkhorstrücken 27, D-4300 Essen (DE)**
Erfinder: **Lammerting, Helmut, Schweerstrasse 12, D-5812 Herbede (DE)**
Erfinder: **Langenhagen, Rolf-Dieter, Kampstrasse 5, D-4321 Hattingen Niederwenigern (DE)**

**EP 0 106 101 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung hochelastischer kalthärtender Polyurethanschaumstoffe aus mindestens difunktionellen Polyisocyanaten, Polyolen mit mindestens zwei Hydroxylgruppen je Molekül, wovon im Mittel mindestens 40% hiervon primäre Hydroxylgruppen sind und das Äquivalentgewicht je Hydroxylgruppe 700 bis 3000 beträgt, Katalysatoren, Treibmitteln, Emulgatoren und Stabilisatoren sowie gegebenenfalls anderen üblichen Zusatzmitteln.

Bei der Herstellung von sogenanntem hochelastischem Polyurethanschaum lässt man ein mindestens difunktionelles Polyisocyanat, z.B. Toluoldiisocyanat oder Diphenylmethandiisocyanat, mit einem Polyol reagieren, welches mindestens zwei Hydroxylgruppen je Molekül aufweist und das im Mittel einen hohen Anteil an primären Hydroxylgruppen hat. Derartige Polyole werden in der Regel dadurch hergestellt, dass man zunächst Propylenoxid an einen Startalkohol anlagert und hieran Ethylenoxid in solchen Mengen anlagert, dass mindestens 40% der Hydroxylgruppen, vorzugsweise 70 bis 90% der Hydroxylgruppen, in Form primärer Hydroxylgruppen vorliegen.

Bedingt durch den hohen Gehalt an primären OH-Gruppen weisen die Polyole in bezug auf die Isocyanate eine hohe Reaktivität auf. Im Gegensatz zu konventionellen Polyurethanschäumen, sogenannten Heissschäumen, wird deshalb bereits beim Aufschäumen eine hohe Vernetzungsdichte erzielt. Dies hat den Vorteil, dass beim Aushärten auf die Zufuhr von äusserer Energie verzichtet werden kann und dass die Zeit für die Aushärtung der Schäume insgesamt verkürzt wird. Nachteilig ist aber, dass die Tendenz zur Bildung geschlossenzelliger Schäume erhöht und der Verarbeitungsspielraum eingeengt wird. Unter Verarbeitungsspielraum sind dabei die Toleranzgrenzen zu verstehen, innerhalb derer von einer Rezeptur abgewichen werden kann, ohne dass die Ausbildung stabiler und gleichzeitig offenzelliger Schäume gefährdet wird.

Der durch die hohe Reaktivität der Verschäumungskomponenten bedingte engere Verarbeitungsspielraum und damit der enge Bereich der Ausbildung eines zwar stabilen, aber doch offenzelligen Schaumes gestattet es nicht, als Schaumstabilisatoren diejenigen Produkte zu verwenden, die bei der Herstellung von sogenannten Heissschäumen mit Erfolg eingesetzt werden. Beispiele solcher Stabilisatoren für sogenannte Heissschäume sind in der FR-A 2 250 781 und FR-A 2 287 481 beschrieben. Dabei soll nach dem Verfahren der FR-A 2 250 781 ein Schaumstabilisator verwendet werden, welcher folgende Struktur haben kann

(I) $R_aSi[(OSiMe_2)_n(OSiMeG)_dOSiMe_2G]_{4-a}$,
(II) $GMe_2Si(OSiMe_2)_n(OSiMeG)_bOSiMe_2G$,
(III) $Me_3Si(OSiMe_2)_n(OSiMeG)_cOSiMe_3$ oder
(IV) $R_aSi[(OSiMe_2)_n(OSiMeG)_cOSiMe_3]_{4-a}$.

Dabei bedeuten

R eine von aliphatischer Unsättigung freie Kohlenwasserstoffgruppe mit 1 bis 10 Kohlenstoffatomen,

Me eine Methylgruppe,

G eine Gruppe der folgenden allgemeinen Formel

$-D(OR'')_mA$

worin D eine Alkylengruppe mit 1 bis 30 Kohlenstoffatomen darstellt, R″ eine aus Ethylen- sowie Propylen- und/oder Butylengruppen aufgebaute Gruppe, wobei die Anzahl der Ethylengruppen, bezogen auf die anderen Alkylengruppen, so gewählt ist, dass das Verhältnis der Kohlenstoffatome zu den Sauerstoffatomen der ganzen Gruppe OR″ sich von 2,3:1 bis 2,8:1 erstreckt,

m eine Zahl mit einem durchschnittlichen Wert von 25 bis 100,

A eine Gruppe der folgenden allgemeinen Formeln

$-OR'$, $-O\underset{\underset{O}{\|}}{C}R'$ und $-O\underset{\underset{O}{\|}}{C}OR'$

worin R′ eine von aliphatischer Unsättigung freie Kohlenwasserstoff- oder Kohlenwasserstoffoxygruppe darstellt und die Gruppe A insgesamt weniger als 11 Atome aufweist,

a eine Zahl mit einem durchschnittlichen Wert von 0 bis 1,

n eine Zahl mit einem durchschnittlichen Wert von 6 bis 420,

d eine Zahl mit einem durchschnittlichen Wert von 0 bis 30,

b eine Zahl mit einem durchschnittlichen Wert von 1 bis 30 und

c eine Zahl mit einem durchschnittlichen Wert von 3 bis 30 bedeuten, mit der Massgabe, dass das Verhältnis der Gesamtanzahl der $Me_2SiO$-Einheiten zu der Gesamtanzahl der

$-\underset{\underset{G}{|}}{Si}-O-$Einheiten

in einem Bereich von 3,5:1 bis 15:1 liegt.

In der FR-A 2 287 481 sind zur Herstellung heisshärtender Schaumstoffe Polysiloxan-Polyoxyalkylen-Blockmischpolymere beschrieben, welche Polyoxyalkylenblöcke unterschiedlichen Molekulargewichts enthalten. Das mittlere Molekulargewicht des einen Blockes soll 900 bis 1300, das mittlere Molekulargewicht des anderen Blokkes 3800 bis 5000 betragen. Die Hydrophilie beider Blöcke ist gleich, da beide Blöcke einen Gehalt an Oxyethyleneinheiten von 20 bis 60% aufweisen sollen.

Die in den beiden vorgenannten französischen Patentschriften beschriebenen Blockmischpolymerisate versagen bei einem Verfahren zur Herstellung von kalthärtenden Polyurethanschaumstoffen.

Infolge der hohen Reaktivität der Verschäumungsrohstoffe ist es bei der Herstellung von hochelastischen kalthärtenden Polyurethanschäumen durch Anwendung höherfunktioneller Isocyanate oder Polyether und unter Mitverwendung von niedermolekularen polyfunktionellen Vernetzerverbindungen im Prinzip möglich, auch ohne Zusatz von Schaumstabilisatoren stabile Schaumkörper zu erhalten. Die auf diesem Wege erhaltenen Schaumstoffe weisen jedoch eine vergröberte Zellstruktur auf und sind zudem im wesentlichen geschlossenzellig und daher technisch nicht brauchbar.

Zur Regulierung der Zellstruktur dieser Schaumstoffe können niedermolekulare Methyl- oder Phenylmethylpolysiloxane eingesetzt werden, wie sie z.B. in der DE-A 2 533 074 und der DE-A 2 221 811 beschrieben sind. Es werden dadurch in einem engen Bereich ausreichend offenzellige Schäume mit regulierter Zellstruktur erhalten, jedoch ist der Verarbeitungsspielraum eng und was noch wesentlicher ist, für viele Anwendungen sind die physikalischen Eigenschaften dieser Schaumstoffe nicht ausreichend. Infolge ihres hohen Vernetzungsgrades haben diese Schaumstoffe niedrige Werte für die Bruchdehnung und Reissfestigkeit und ausserdem eine relativ geringe Härte. Zu diesem Stand der Technik ist die DE-A 2 728 031 zu nennen. Das Verfahren ist dabei dadurch gekennzeichnet, dass man zur Herstellung kalthärtender Polyurethanschaumstoffe dem Verschäumungsansatz

A) 0,01 bis 2,0 g/100 g Polyol einer Siloxankomponente zusetzt, welche wahlweise besteht aus

$A_1$) einem geradkettigen oder verzweigten, fraktionierten Organopolysiloxan, welches ein Gemisch aus Polysiloxanen mit 7 bis 20 Si-Atomen darstellt, wobei die Si-Valenzen, die nicht über Sauerstoff mit Silicium verbunden sind, mit niederen, gegebenenfalls substituierten Alkylresten und/oder Arylresten abgesättigt sind, wobei die endständigen Si-Atome jeweils eine niedere Alkyoxy- oder eine Hydroxygruppe aufweisen können oder

$A_2$) an sich bekannten Polyoxyalkylen-Polysiloxan-Blockmischpolymerisaten, deren Siloxanblock der Definition unter $A_1$) entspricht, wobei jedoch an die Stelle des oder der Alkoxyreste Polyetherblöcke mit mittleren Molekulargewichten <1500 getreten sind oder

$A_3$) an sich bekannten geradkettigen oder verzweigten Organopolysiloxanen, der Siloxanblock bzw. -blöcke annähernd im statistischen Gleichgewicht ist (sind), wobei jeder Block im Mittel 5 bis 15 Si-Atome aufweist und pro Siloxanblock mindestens eine substituierte Alkylgruppe oder eine Alkylarylgruppe enthalten, oder

$A_4$) an sich bekannten Polyoxyalkylen-Polysiloxan-Blockmischpolymerisaten, deren Siloxanblock bzw. -blöcke annähernd im statistischen Gleichgewicht ist (sind) und wobei jeder Block im Mittel 5 bis 15 Si-Atome aufweist und pro Siloxanblock 2 bis 6 Polyoxyalkylenblöcke mit mittleren Molekulargewichten <1500 enthalten, und

B) 0,01 bis 0,2 g Hydroxyäquivalentgewicht/100 g Polyol eines Vernetzers zusetzt, welcher mindestens 4 Hydroxylgruppen pro Molekül aufweist und ein Hydroxyäquivalentgewicht von 30 bis 180 hat.

Um diese Nachteile zu beseitigen, sind hochelastische Schaumstoffe entwickelt worden, die neben den reaktiven Polyolen mit überwiegend difunktionellen Isocyanaten, wie reinem Toluoldiisocyanat oder Mischungen von TDI mit 20% oder weniger Diphenylmethandiisocyanat und geringen Anteilen an Vernetzerverbindungen als Rohstoffen, hergestellt werden. Um die Härte dieser Schaumstoffe zu verbessern, können neben den aus Propylen- und Ethylenoxid bestehenden Polyolen weiterhin solche Polyole eingesetzt werden, die zusätzlich chemisch gebunden oder physikalisch eindispergiert polymere Bestandteile enthalten, wie z.B. Polymerisate des Acrylnitrils und Styrol oder polymere Harnstoffderivate.

Formulierungen auf dieser Basis ergeben keine eigenstabilen Schäume, d.h. ohne Zusatz von Stabilisatoren fallen die Schaumstoffe nach dem Aufsteigen in sich zusammen. Die für diese Schaumstoffe erforderlichen Stabilisatoren müssen demnach gegen Rückfall stabilisierend und zellregulierend wirken und in einem möglichst weiten Bereich die Bildung von offenzelligen Schäumen gewährleisten.

Zur Erzielung dieser Anforderungen sind bereits Verbindungen vorgeschlagen worden. Dabei kann man unter den Stabilisatoren des Standes der Technik zwei Gruppen unterscheiden:

Die eine Gruppe wird von Polysiloxan-Polyoxyalkylen-Copolymerisaten gebildet, wobei der Polysiloxanblock ein Molekulargewicht von etwa 150 bis 2500 und der Polyoxyalkylenblock ein Molekulargewicht von etwa 150 bis 1500 hat. Die Produkte sind frei von Hydroxylgruppen. Derartige Produkte und ihre Verwendung bei der Polyurethanverschäumung sind in der US-A 3 741 917 und der US-A 4 031 044 beschrieben.

Die andere Gruppe von Stabilisatoren umfasst Polysiloxane, welche mit organischen Gruppen modifiziert sind. Derartige Gruppen sind die Cyanoalkylgruppe (US-A 3 952 038), die Cyanoalkoxyalkylgruppe (DE-B 2 402 690), die Sulfolanyloxyalkylgruppe (US-A 4 110 272), die Morpholinoalkoxyalkylgruppe (US-A 4 067 828) und die tert. Hydroxyalkylgruppe (US-A 4 039 490).

Ein Nachteil der vorgenannten und im Prinzip brauchbaren Stabilisatoren ist in ihrem verhältnismässig engen Verarbeitungsspielraum zu sehen. Dies zwingt den Verarbeiter zur Einhaltung sehr enger Toleranzen bei der Dosierung der Verschäumungskomponenten, die nicht immer mit der erforderlichen Sicherheit eingehalten werden können. Neben den prinzipiellen Anforderungen an einen Stabilisator, d.h. Stabilisierung gegen Rückfall, Zellregulierung und Zellöffnung nach dem Aufsteigen, kommt dem Stabilisator hauptsächlich die Aufgabe zu, für die in der Praxis auftretenden Veränderungen eine ausgleichende Funktion auszuüben. Bei unterschiedlicher Reaktivität und Stabilität einer Schaumformulierung muss es möglich sein, durch Konzentrationsver-

änderung des Stabilisators das gewünschte Stabilisierungsniveau einzustellen. Aus diesem Grunde ist für die Praxis das Verarbeitungsspiel eines Stabilisators in bezug auf Konzentrationsveränderungen besonders wichtig. Ein guter Stabilisator muss sowohl in niedrigeren wie in höheren Anwendungskonzentrationen neben der Schaumstabilisierung vergleichbare Offenzelligkeit und Zellstrukturen ergeben.

Aus diesen Anforderungen für einen Schaumstabilisator wird ersichtlich, dass diese Produkte teilweise widersprüchliche Aufgaben zu erfüllen haben. Insbesondere kommt dies darin zum Ausdruck, dass einerseits der Schaum gegen Zurücksacken stabilisiert werden muss, andererseits die Öffnung der Zellen nach dem Erreichen der maximalen Schaumhöhe aber möglichst vollständig erfolgen soll. In Anbetracht der komplexen Vorgänge bei der Verschäumung von verschiedenen Polyurethanformulierungen ist es kaum möglich, Voraussagen über Konstitution und Wirksamkeit von Schaumstabilisatoren zu machen und insbesondere Erkenntnisse, die z.B. auf dem Gebiet der konventionellen Heissschäume gewonnen wurden, auf andere Schaumsysteme zu übertragen. Für jede Schaumtechnologie ist es praktisch zwingend, die einzelnen Variationsmöglichkeiten im Aufbau der Stabilisatormoleküle empirisch zu erproben. Die Auffindung einer speziellen Variation kann daher für die Praxis einen wesentlichen Fortschritt darstellen.

Der vorliegenden Erfindung liegt die Aufgabe zugrunde, für die Herstellung von hochelastischen kalthärtenden Polyurethanschäumen neue Stabilisatoren zu finden, welche verbesserte stabilisierende Eigenschaften haben und bei verhältnismässig breitem Verarbeitungsspielraum gleichzeitig offenzellige Schaumstoffe liefern. Diese Eigenschaftskombination war bei Produkten des Standes der Technik nicht zu finden.

Diese Aufgabe wird dadurch gelöst, dass man als Stabilisatoren Polysiloxan-Polyoxyalkylen-Blockmischpolymerisate mit folgenden Merkmalen verwendet:

a) der Polysiloxanblock ist linear oder verzweigt und enthält im Mittel 4 bis 25 Siliciumatome, wobei die an den Siliciumatomen gebundenen organischen Reste Polyoxyalkylen- oder Methylreste sind, jedoch bis zu 30% der Methylreste durch substituierte Alkylreste mit 1 bis 4 Kohlenstoffatomen und/oder Phenylreste ersetzt sein können,

b) der Polyoxyalkylenanteil besteht aus mindestens zwei aus Oxyethylen- und Oxypropyleneinheiten gebildeten Polyoxyalkylenblöcken $A_1$ und $A_2$, wobei der Block $A_1$ aus 45 bis 100 Mol-% Oxyethyleneinheiten und 55 bis 0 Mol-% Oxypropyleneinheiten und der Block $A_2$ aus 0 bis 50 Mol-% Oxyethyleneinheiten und 100 bis 50 Mol-% Oxypropyleneinheiten gebildet ist, das Molgewicht der Polyoxyalkylenblöcke $A_1$ und $A_2$ jeweils 150 bis 1200 und das molare Verhältnis der Blöcke $A_1$:$A_2$ = 20:80 bis 80:20 beträgt,

c) der Polysiloxanblock ist mit den Polyoxyalkylenblöcken über SiOC- oder SiC-Brücken verbunden, wobei an jedem Polysiloxanblock im Mittel 1,5 bis 10 Polyoxyalkylenblöcke gebunden sind.

Entsprechend einer bevorzugten Ausführungsform des erfindungsgemässen Verfahrens verwendet man Polysiloxan-Polyoxyalkylen-Blockmischpolymere der allgemeinen Formel

$$P(CH_3)_2SiO[Si(CH_3)_2O]_a(SiCH_3PO)_bSi(CH_3)_2P \quad \text{I}$$

wobei P ein Polyoxyalkylenrest $A_1$ oder $A_2$ oder ein Methylrest ist, aber mindestens 1,5 Reste P einen Polyoxyalkylenrest darstellen und a = 1 bis 25, b = 0 bis 10 ist.

Besonders bevorzugt sind Polysiloxan-Polyoxyalkylen-Blockmischpolymere, in denen die Polyoxyalkylenreste ausschliesslich endständig oder seitenständig gebunden sind. Diese bevorzugten Blockmischpolymere lassen sich durch die allgemeinen Formeln II and III wiedergeben:

$$P(CH_3)_2SiO[Si(CH_3)_2O]_aSi(CH_3)_2P \quad \text{II}$$

$$(CH_3)_3SiO[Si(CH_3)_2O]_a(\underset{\substack{|\\ P}}{SiCH_3O})_bSi(CH_3)_3 \quad \text{III}$$

worin in Formel II a = 2 bis 23 und in Formel III a = 0 bis 20, b = 1,5 bis 10 ist und P die Polyoxyalkylenblöcke $A_1$ und $A_2$ darstellt. Die Polyoxyalkylenblöcke $A_1$ und $A_2$ können an die Polysiloxanblöcke über SiC oder SiOC gebunden sein und bestehen überwiegend auf Oxyethylen- und Oxypropyleneinheiten. Ihre Zusammensetzung lässt sich durch folgende allgemeine Formel darstellen:

$$(R)_x\text{-O-}(C_mH_{2m}O)_yR'$$

wobei R eine Alkylengruppe mit 2 bis 4 C-Atomen sein kann und x = 0 oder 1 ist. R′ ist ein Wasserstoffrest, ein Alkylrest mit 1 bis 4 C-Atomen, ein Carboxyrest oder ein Alkylarylrest.

Für den Polyoxyalkylenblock $A_1$ ist m im Mittel = 2,10 bis 2,55 und y = 2 bis 24, für den Polyoxyalkylenblock $A_2$ ist m im Mittel = 2,60 bis 3,00 und y = 2 bis 20.

Bevorzugt liegt das molare Verhältnis der Polyoxyalkylenblöcke $A_1$ und $A_2$ an einem Polysiloxanblock im Bereich von $A_1$:$A_2$ = 30:70 bis 70:30.

Die Herstellung der erfindungsgemässen Polysiloxan-Polyoxyalkylen-Blockmischpolymeren kann nach an sich bekannten Verfahren erfolgen. Die SiOC verbundenen Copolymeren können z.B. durch Umsetzung von endständig funktionelle Gruppen X, wie Halogen, Sulfat oder Alkylsulfonat, aufweisenden Polysiloxanen mit endständig Hydroxylgruppen aufweisenden Polyoxyalkylenpolymerisaten in Gegenwart eines Säureakzeptors, wie z.B. $NH_3$ oder tert. Aminen, gebildet werden.

Die SiC verbundenen Copolymeren werden gebildet durch Umsetzung von Polysiloxanen, die endständig und/oder in der Polysiloxankette SiH-Gruppen aufweisen, mit Polyoxyalkylenen, die endständig eine C = C Doppelbindung enthalten. Zur Beschleunigung dieser Anlagerungsreaktion sind insbesondere Platinkatalysatoren, wie z.B. $H_2PtCl_6 \cdot 6\,H_2O$ oder cis-$[Pt(NH_3)_2Cl_2]$, geeignet.

Es war für den Fachmann nicht vorherzusehen, dass die beim erfindungsgemässen Verfahren zu verwendenden Blockmischpolymere die gewünschte Eigenschaftskombination aufweisen. Weder durch Variation des Ethylenoxid-Propylenoxid-Verhältnisses in Blockmischpolymeren, die einen einheitlichen Polyoxyalkylenanteil enthalten noch durch Mischen von Blockmischpolymeren, die jeweils Polyoxyalkylenketten enthalten, die einheitlich sind und einerseits den Aufbau der Blöcke $A_1$ und andererseits die Zusammensetzung der Blöcke $A_2$ aufweisen, liessen sich die gewünschten Verbesserungen erzielen. Die Verknüpfung von zwei unterschiedlich aufgebauten Polyoxyalkylenblöcken mit einem Polysiloxansegment erbringt dagegen überraschenderweise eine deutliche Verbesserung gegenüber den bekannten Stabilisatoren des Standes der Technik.

Die nach dem erfindungsgemässen Verfahren zu verwendenden Organopolysiloxane können gegebenenfalls zur weiteren Verbesserung der Zellregulierung und der Offenzelligkeit der hochelastischen Schaumstoffe mit Alkyl- oder Alkyl-/Arylpolysiloxanen von relativ kurzer Kettenlänge kombiniert werden. Bevorzugte Beispiele für Polysiloxane dieses Typs sind solche, die definierte Kettenlängen mit 4 bis 15 Siliciumatomen aufweisen. Zur Verbesserung der Mischbarkeit von Polyol und Isocyanat können die erfindungsgemässen Organopolysiloxane im Gemisch mit nichtionischen organischen Emulgatoren, wie z.B. ethoxylierten Alkylphenolen oder Fettalkoholethoxylaten, verwendet werden.

Beim erfindungsgemässen Verfahren kann man die Reaktionskomponenten bzw. Zusätze verwenden, die für die Herstellung von hochelastischen Polyurethanschäumen bekannt und üblich sind.

Als mindestens difunktionelle Polyisocyanate sind die Isomeren des Toluoldiisocyanates, die Isomeren des Diisocyanatodiphenylmethans oder oligomere Polyphenylmethylenisocyanate einsetzbar.

Die Polyole weisen mindestens 2, insbesondere 2 bis 8, Hydroxylgruppen je Molekül auf, wovon im Mittel mindestens 40%, vorzugsweise 70 bis 90%, hiervon primäre Hydroxylgruppen sind. Der auf jede Hydroxylgruppe entfallende Molekulargewichtsanteil (Äquivalentgewicht) beträgt 700 bis 3000. Die Polyole können ausschliesslich aus Oxyethylen- und Oxypropyleneinheiten aufgebaut sein. Bis zu 30 Gew.-% anderer polymerer Bestandteile können chemisch in den Polyolen gebunden oder physikalisch in diesen dispergiert sein. Derartige andere polymere Bestandteile sind z.B. Polymerisate des Styrols oder Acrylnitrils oder Copolymerisate hiervon sowie z.B. polymere organische Harnstoffderivate. Als Katalysatoren werden die üblichen Katalysatoren, wie z.B. organische Salze von Zinn und tertiäre Amine, eingesetzt.

Geeignete Treibmittel sind neben Wasser die an sich für diesen Zweck bekannten Fluorchlorkohlenwasserstoffe. Weitere Zusatzmittel sind Flammschutzmittel, wie z.B. Chloralkylphosphorsäureester sowie inerte Füllstoffe und Farbpigmente.

In den folgenden Beispielen werden die überlegenen Eigenschaften der beim erfindungsgemässen Verfahren verwendeten Stabilisatoren in üblichen Schaumrezepturen des Standes der Technik gezeigt.

Die Herstellung der beim erfindungsgemässen Verfahren zu verwendenden Polysiloxan-Polyether-Mischpolymerisaten erfolgt nach im Prinzip bekannten Methoden. Beispielhaft für die Herstellung dieser Produkte sind die in den Ausführungsbeispielen 1 bis 10, insbesondere 1 und 5, beschriebenen Verfahrensweisen.

Beispiel 1

Dieses Beispiel zeigt die Umsetzung eines Polysiloxans mit der durchschnittlichen Formel $X[(CH_3)_2SiO]_{4,8}Si(CH_3)_2X$ (I) (X = Cl und $SO_{4,2}$, ca. 75% der Endgruppen sind Cl) mit einem Polyether A (erhalten durch Anlagerung von 20 Gew.-% Ethylen- und 80 Gew.-% Propylenoxid an Butylglykol zu einem Molekulargewicht von 515) und einem Polyether B (erhalten durch Anlagerung von 60 Gew.-% Ethylen- und 40 Gew.-% Propylenoxid an Butylglykol zu einem Molekulargewicht von 530) zu einem über SiOC-Bindungen verknüpften Polysiloxan-Polyoxyalkylen-Blockcopolymerisat.

In einem Kolben, der mit Rührer, Thermometer, Gaseinleitung und Destillationsaufsatz versehen war, wurden 113, 3 g Polyether A (= 0,22 Mol) und 116,4 g Polyether B (= 0,22 Mol) in 800 ml Toluol vorgelegt. Unter Stickstoffatmosphäre wurden 150 ml Toluol zur azeotropen Entfernung von Wasser abdestilliert. Nun wurde der Destillationsaufsatz gegen einen mit einem Trockenrohr versehenen Rückflusskühler ausgetauscht. Bei 50°C gab man 98,3 g Siloxan I (= 0,2 Mol) in den Kolben, mischte kurz durch und leitete unter Rühren Ammoniakgas ein, bis der Ansatz ammoniakalisch reagierte. Man liess den Ansatz noch eine Stunde nachreagieren, filtrierte das ausgefallene Salz ab und entfernte das Toluol durch Destillation bei 70°C und ca. 20 mbar. Man erhielt ein fast klares, gelbliches Produkt mit einer Viskosität (20°C) von 39,8 mPas.

Beispiele 2, 3 und 4

Die Herstellung der in Tabelle 1 angegebenen Produkte erfolgte nach der in Beispiel 1 beschriebenen Methode.

Tabelle 1

| Beispiel | Siloxan Typ | Einwaage g | Einwaage Mol | Polyether Typ | Einwaage g | Einwaage Mol | Viskosität (20°C) mPas |
|---|---|---|---|---|---|---|---|
| 2 | I | 98,3 | 0,2 | A | 226,6 | 0,44 | 32,9 |
| 3 | I | 98,3 | 0,2 | B | 232,8 | 0,44 | 42,3 |
| 4 | I | 98,3 | 0,2 | C | 228,8 | 0,44 | 36,8 |

Polyether C wurde durch Anlagerung von Ethylen- und Propylenoxid an Butylglykol erhalten und enthielt 60 Gew.-% Propylenoxid. Das Molekulargewicht betrug 520. Damit entsprach Polyether C in seiner Zusammensetzung der durchschnittlichen Zusammensetzung des in Beispiel 1 eingesetzten Polyethergemisches aus den Polyethern A und B.

Die weiteren Beispiele zeigen die Umsetzungen von SiH-haltigen Siloxanen mit allylgruppenhaltigen Polyethern zu über SiC-Bindungen verknüpften Polysiloxan-Polyoxyalkylen-Blockmischpolymerisaten.

Beispiel 5

141,3 g (= 0,25 Mol) Allylpolyethermonool D (erhalten durch Anlagerung von Ethylen- und Propylenoxid an Allylalkohol mit 80 Gew.-% Propylenoxid und 20 Gew.-% Ethylenoxid, JZ = 44,9), 132,5 g (= 0,25 Mol) Allylpolyethermonool E (Herstellung wie D, jedoch mit 40 Gew.-% Propylenoxid, JZ=47,9) und 450 ml Toluol wurden in einem mit Rührer, Thermometer, Gaseinleitung und Destillationsaufsatz versehenen Kolben vorgelegt und durch Abdestillieren von ca. 150 ml Toluol azeotrop getrocknet. Die Trocknung und weitere Reaktion wurden unter Durchleitung von Stickstoff ausgeführt. Nach der Trocknung wurde der Kolben mit einem Rückflusskühler versehen und bei 115°C wurden 10 mg cis-$[Pt(NH_3)_2Cl_2]$ als Katalysator zugesetzt. Anschliessend wurden 70 g (= 0,1 Mol) eines Polysiloxans mit der durchschnittlichen Formel $(CH_3)_3SiO[(CH_3)HSiO]_4[(CH_3)_2SiO]_4Si(CH_3)_3$ (II) in 30 Minuten zugetropft. Danach liess man bei 115°C nachreagieren bis nur noch geringe Mengen des eingesetzten SiH nachgewiesen werden konnten. Nun wurden 4 g Bentonit bei 60°C eingerührt. Nach 1 Stunde wurde der Ansatz filtriert und durch Destillation bei 70°C und ca. 20 mbar vom Toluol befreit. Man erhielt ein klares gelbliches Produkt, das eine Viskosität (20°C) von 219 mPas hatte.

Beispiele 6, 7 und 8

Die Herstellung der in Tabelle 2 angegebenen Produkte erfolgte nach der in Beispiel 5 beschriebenen Methode.

Tabelle 2

| Beispiel | Siloxan Typ | Einwaage g | Einwaage Mol | Polyether Typ | Einwaage g | Einwaage Mol | Viskosität (20°C) mPas |
|---|---|---|---|---|---|---|---|
| 6 | II | 70 | 0,1 | D | 282,6 | 0,5 | 191 |
| 7 | II | 70 | 0,1 | E | 265 | 0,5 | 225 |
| 8 | II | 70 | 0,1 | F | 276 | 0,5 | 203 |

Polyether F wurde durch Anlagerung von Ethylen- und Propylenoxid an Allylalkohol erhalten und enthielt 60 Gew.-% Propylenoxid. Die Jodzahl betrug 46. Damit entsprach der Polyether F in seiner Zusammensetzung der durchschnittlichen Zusammensetzung des in Beispiel 5 eingesetzten Polyethergemisches aus den Polyethern D und E.

Beispiel 9 und 10

Die Herstellung der in Tabelle 3 angegebenen Produkte erfolgte nach der in Beispiel 5 beschriebenen Methode. Die eingesetzten Allylpolyether enthielten jedoch anstelle der endständigen OH-Gruppen $OCH_3$-Gruppen. Die Herstellung der Polyether erfolgte durch Anlagerung von Ethylen- und Propylenoxid an Allylalkohol und anschliessender Methylierung der freien OH-Gruppe.

Folgende α-Methoxy-ω-allylpolyether wurden hergestellt:

Polyether G: Propylenoxidgehalt = 80 Gew.-%
JZ = 44,2

Polyether H: Propylenoxidgehalt = 40 Gew.-%
JZ = 46,2

Polyether J: Propylenoxidgehalt = 55 Gew.-%
JZ = 46,0

Diese Polyether wurden umgesetzt mit einem Polysiloxan der folgenden mittleren Zusammensetzung:

$$(CH_3)_3SiO[(CH_3)HSiO]_{2,2}[(CH_3)_2SiO]_{1,8}Si(CH_3)_3 \quad (III)$$

Tabelle 3

| Beispiel | Siloxan Typ | Siloxan Einwaage g | Siloxan Einwaage Mol | Polyether Typ | Polyether Einwaage g | Polyether Einwaage Mol | Viskosität (20°C) mPas |
|---|---|---|---|---|---|---|---|
| 9 | III | 64,2 | 0,15 | G | 82,7 | 0,144 | 56,3 |
| | | | | H | 147,1 | 0,268 | |
| 10 | III | 64,2 | 0,15 | J | 227,4 | 0,412 | 61,7 |

Der Polyether J weist einen Ethylenoxid/Propylenoxid-Gehalt auf, der dem Gemisch der in Beispiel 9 eingesetzten Polyether G und H entspricht.

Die Herstellung und Bewertung der Schaumstoffe unter Anwendung der erfindungsgemässen Organopolysiloxane erfolgte in Formulierungen für Form- und Blockschäume auf folgende Weise:

Durchführung der Verschäumungsversuche
Formschäume

In einem 2 l-Becher wurden die in den nachfolgend beschriebenen Formulierungen 1 bzw. 2 aufgeführten Komponenten, ausser dem Isocyanat, eingewogen und mit einem Propellerrührer 60 Sek. bei 500 U/Min. vermischt. Danach wurden die entsprechenden Isocyanatmengen zugegeben, und das Gemisch für weitere 7 Sek. bei 2000 U/Min. gerührt. Das Reaktionsgemisch wurde dann in eine auf 50°C vorbeheizte und mit einem Trennmittel vorbehandelte Aluminiumform mit den Massen 40 cm × 40 cm × 10 cm gegeben. Die Formenstandzeit für beide Formulierungen betrug 8 Min.

Bewertung der Formschäume

Zur Bestimmung der Aufdrückkraft wurde das Schaumteil behutsam der Form entnommen. Unmittelbar darauf wurde am nicht angedrückten Schaumteil die Eindruckhärte bei 50% Stauchung gemessen. Der hierzu verwendete Rundstempel hatte die Fläche von 300 $cm^2$. Nach Entlastung wurden die im Schaumteil vorhandenen geschlossenen Zellen durch ausgiebiges Walken vollständig geöffnet. Danach wurde nochmals die Eindruckhärte bei 50% Stauchung gemessen. Die Differenz der beiden Messwerte in N wurde als Mass für die Aufdrückkraft genommen.

Ausserdem wurde die Zahl der Zellen pro cm sowie die Gleichmässigkeit der Zellstruktur bewertet.

Blockschäume
Versuchsdurchführung

Die Versuche wurden auf einer 2-Komponenten-Admiral-Niederdruckmaschine durchgeführt. Der Polyolausstoss betrug 10 kg/Min. Der Schäumprozess erfolgte in einer oben offenen Box mit den Massen 100 cm × 60 cm × 60 cm.

Bewertung der Blockschäume

Zur Bewertung des Einflusses von verschiedenen Stabilisatoren bei unterschiedlichen Konzentrationen wurde in den Blockschäumen die Intensität des Abblasens beurteilt. Zusätzlich wurden die Aufdrückkraft, die Porosität der Schaumstoffe und ihre Elastizität nach dem Aufdrücken gemessen. Bei den Blockschäumen wurde ausserdem die Zahl der Zellen pro cm und die Gleichmässigkeit der Zellstruktur bewertet. Die Messungen wurden wie folgt durchgeführt.

Beurteilung des Abblasens:

Unterschieden wurde zwischen keinem, leichtem und gutem Abblasen. Mit einem guten Abblasen wurde eine gleichmässig über die gesamte Schaumbreite auftretende Öffnung der Kuppenhaut nach Beendigung der Steigreaktion bezeichnet.

Messung der Elastizität:

Zur Anwendung kam der Ball-Rebound-Test nach ASTM D 1564.

Messung der Porosität:

Die angegebenen Werte geben den notwendigen Staudruck in mm Wassersäule an, der notwendig ist, um einen gleichbleibenden Luftstrom von 6 l/Min. durch ein 10 cm dickes Schaumstück mit den Seitenlängen 30 cm × 30 cm aufrechtzuerhalten. Niedrigere Messwerte zeigen demnach eine höhere Offenzelligkeit an.

Messung der Aufdrückkraft:

Zur Durchführung dieser Messung wurde in eine oben offene Box mit den Massen 25 cm × 25 cm × 25 cm geschäumt. Nach einer zweitägigen Lagerung unter normaler Atmosphäre wurde dem Päckchen in einer Höhe von 20 cm die Kuppe abgeschnitten. Gemessen wurde die Eindruckstauchhärte am unberührten sowie am gut durchgewalkten Schaum. Die Differenz der ermittelten Kräfte in N ist die zum Aufdrücken der Zellen benötigte Kraft. Zum Messen der Eindruckkräfte wurde ein quadratischer Stempel mit einer Fläche von 100 $cm^2$ verwendet.

Die Werte für Aufdrückkraft, Porosität und Elastizität stehen in einem engen Zusammenhang und stellen ein Mass für die Offenzelligkeit der Schaumstoffe nach der Herstellung dar. Da die

nach dem Aufdrücken noch verbleibenden Reste von Zellfenstern den Luftdurchgang behindern, zeigen ursprünglich geschlossene Schaumstoffe auch nach dem Aufdrücken schlechtere Porositäts- und Elastizitätswerte.

Verschäumungsbeispiele

Die Überprüfung der erfindungsgemäss zu verwendenden Polysiloxan-Polyoxyalkylen-Blockmischpolymerisate erfolgte in folgenden Formulierungen für hochelastische Polyurethanformschäume.

Formulierung 1:

| | |
|---|---|
| Desmophen® 3973 | 60 Gew.-Teile |
| Desmophen® 3119 | 40 Gew.-Teile |
| Wasser | 3,2 Gew.-Teile |
| Triethylendiamin (33% in Propylenglykol) | 0,4 Gew.-Teile |
| Bis(dimethylaminoethyl)ether (70% in Dipropylenglykol) | 0,3 Gew.-Teile |
| Dibutylzinndilaurat | 0,01 Gew.-Teile |
| Stabilisator | variabel |
| TDI 80/MDI = 80/20 | 39,2 Gew.-Teile |

Desmophen® 3973 ist ein ausschliesslich aus Propylen- und Ethylenoxid aufgebautes Polyol der Firma Bayer AG mit mehr als 70% primären OH-Gruppen und einem mittleren Molekulargewicht von 6000.

Desmophen® 3119 ist ein polymere Harnstoffsegmente enthaltendes Polyol der Firma Bayer AG mit 70 bis 80% primären OH-Gruppen und einem mittleren Molekulargewicht von 6000.

TDI 80 ist ein Gemisch des 2,4 und 2,6 Isomeren des Toluoldiisocyanats im Verhältnis 80 zu 20. Als MDI wurde ein oligomeres Polyphenylmethylenisocyanat der Firma Bayer (Desmodur® 44 020) verwendet.

Die Formschäume nach dieser Formulierung haben ein Raumgewicht von ungefähr 34 kg/m³.

Formulierung 2:

| | |
|---|---|
| Voranol® CP 4711 | 60 Gew.-Teile |
| Niax® Polyol 34 - 28 | 40 Gew.-Teile |
| Wasser | 3,7 Gew.-Teile |
| Diethanolamin | 0,6 Gew.-Teile |
| Triethylendiamin (33% in Propylenglykol) | 0,4 Gew.-Teile |
| Bis(dimethylaminoethyl)ether (70% in Dipropylenglykol | 0,12 Gew.-Teile |
| Dibutylzinndilaurat | 0,02 Gew.-Teile |
| Stabilisator | variabel |
| TDI 80 | 42,3 Gew.-Teile |

Voranol® CP 4711 ist ein ausschliesslich aus Propylen- und Ethylenoxid aufgebautes Polyol der Firma Dow Chemical mit ungefähr 70% primären OH-Gruppen und einem mittleren Molekulargewicht von 4800.

Niax® Polyol 34 - 28 ist ein polymere Acrylnitril/Styrol-Anteile enthaltendes Polyol der Firma Union Carbide mit überwiegend primären OH-Gruppen und einer OH-Zahl von 28.

Die nach dieser Formulierung entstehenden Formschäume haben ein Raumgewicht von ungefähr 29 kg/m³.

Als Stabilisatoren wurden folgende Gemische eingesetzt:

A) 10 Gew.-% Polysiloxan-Polyoxyalkylen-Blockmischpolymerisat, gelöst in 90 Gew.-% eines Polyethers vom Molekulargewicht 1000 und einem Gewichtsverhältnis Ethylenoxid/Propylenoxid wie 42:58

B) 10 Gew.-% Polysiloxan-Polyoxyalkylen-Blockmischpolymerisat, gemischt mit 85 Gew.-% des gleichen Polyethers wie bei A) und 5 Gew.-% einer Polydimethylsiloxanfraktion der Kettenlänge N = 5 bis 9

C) 10 Gew.-% Polysiloxan-Polyoxyalkylen-Blockmischpolymerisat, gemischt mit 86 Gew.-% des gleichen Polyethers wie bei A) und 4 Gew.-% einer Polydimethylsiloxanfraktion der Kettenlänge N = 8 bis 13.

Als Polysiloxan-Polyoxyalkylen-Blockmischpolymerisate wurden in den Stabilisatorgemischen A), B) und C) erfindungsgemäss die Blockmischpolymerisate aus den Beispielen 1, 5 und 9 sowie zum Vergleich die Blockmischpolymerisate aus den Beispielen 2, 3, 4 sowie 6, 7, 8 und 10 eingesetzt.

In der Schaumformulierung 1 wurden folgende Ergebnisse erhalten.

Stabilisatorgemisch A:

| Mischpolymerisat aus Beispiel | Gew.-Teile Stabilisatorgemisch | Aufdrückkraft | Zellen/cm | Zellstruktur |
|---|---|---|---|---|
| 1 | 0,8 | 300 | 11 | gleichmässig |
| | 1,5 | 450 | 12 | gleichmässig |
| 2 | 0,8 | 500 | 13 | gleichmässig |
| | 1,5 | 800 | 14 | gleichmässig |
| 3 | 0,8 | 360 | 8 | gestört |
| | 1,5 | 600 | 9 | noch gestört |
| 4 | 0,8 | 480 | 11 | noch gestört |
| | 1,5 | 670 | 12 | gleichmässig |

Stabilisatorgemisch B:

| Mischpolymerisat aus Beispiel | Gew.-Teile Stabilisator-gemisch | Aufdrückkraft | Zellen/cm | Zellstruktur |
|---|---|---|---|---|
| 1 | 0,8 | 180 | 12 | gleichmässig |
| | 1,5 | 200 | 12 | gleichmässig |
| 2 | 0,8 | 700 | 14 | gleichmässig |
| | 1,5 | 900 | 15 | gleichmässig |
| 3 | 0,8 | 400 | 10 | gleichmässig |
| | 1,5 | 500 | 10 | gleichmässig |
| 4 | 0,8 | 350 | 13 | gleichmässig |
| | 1,5 | 450 | 14 | gleichmässig |

Stabilisatorgemisch A:

| Mischpolymerisat aus Beispiel | Gew.-Teile Stabilisator-gemisch | Aufdrückkraft | Zellen/cm | Zellstruktur |
|---|---|---|---|---|
| 5 | 0,8 | 250 | 12 | gleichmässig |
| | 1,5 | 400 | 12 | gleichmässig |
| 6 | 0,8 | 400 | 14 | gleichmässig |
| | 1,5 | 620 | 14 | gleichmässig |
| 7 | 0,8 | 380 | 8 | gestört |
| | 1,5 | 700 | 9 | noch gestört |
| 8 | 0,8 | 390 | 11 | noch gestört |
| | 1,5 | 650 | 12 | noch gestört |

Stabilisatorgemisch C:

| Mischpolymerisat aus Beispiel | Gew.-Teile Stabilisator-gemisch | Aufdrückkraft | Zellen/cm | Zellstruktur |
|---|---|---|---|---|
| 5 | 0,8 | 150 | 12 | gleichmässig |
| | 1,5 | 190 | 12 | gleichmässig |
| 6 | 0,8 | 280 | 13 | gleichmässig |
| | 1,5 | 380 | 13 | gleichmässig |
| 7 | 0,8 | 320 | 10 | noch gestört |
| | 1,5 | 400 | 10 | gleichmässig |
| 8 | 0,8 | 220 | 11 | noch gestört |
| | 1,5 | 290 | 12 | gleichmässig |

In der Formulierung 2 wurden folgende Ergebnisse erhalten

Stabilsatorgemisch A

| Mischpolymerisat aus Beispiel | Gew.-Teile Stabilisator-gemisch | Aufdrückkraft | Zellstruktur |
|---|---|---|---|
| 1 | 1,0 | 200 | gleichmässig |
| | 1,8 | 280 | gleichmässig |
| 2 | 1,0 | 280 | gleichmässig |
| | 1,8 | 370 | gleichmässig |
| 3 | 1,0 | 310 | gestört |
| | 1,8 | 430 | noch gestört |
| 4 | 1,0 | 240 | noch gestört |
| | 1,8 | 360 | gleichmässig |

Stabilisatorgemisch B:

| Mischpolymerisat aus Beispiel | Gew.-Teile Stabilisator-gemisch | Aufdrückkraft | Zellstruktur |
|---|---|---|---|
| 1 | 0,8 | 120 | gleichmässig |
| | 1,5 | 190 | gleichmässig |
| 2 | 0,8 | 200 | gleichmässig |
| | 1,5 | 340 | gleichmässig |
| 3 | 0,8 | 260 | noch gestört |
| | 1,5 | 400 | gleichmässig |
| 4 | 0,8 | 200 | gleichmässig |
| | 1,5 | 290 | gleichmässig |

Stabilisatorgemisch A:

| Mischpolymerisat aus Beispiel | Gew.-Teile Stabilisator-gemisch | Aufdrückkraft | Zellstruktur |
|---|---|---|---|
| 5 | 1,0 | 240 | gleichmässig |
| | 1,8 | 300 | gleichmässig |
| 6 | 1,0 | 320 | noch gestört |
| | 1,8 | 480 | gleichmässig |
| 7 | 1,0 | 300 | gestört |
| | 1,8 | 450 | noch gestört |
| 8 | 1,0 | 300 | noch gestört |
| | 1,8 | 460 | gleichmässig |

Stabilisatorgemisch C:

| Mischpolymerisat aus Beispiel | Gew.-Teile Stabilisator-gemisch | Aufdrückkraft | Zellstruktur |
|---|---|---|---|
| 5 | 0,8 | 110 | gleichmässig |
| | 1,5 | 150 | gleichmässig |
| 6 | 0,8 | 180 | gleichmässig |
| | 1,5 | 280 | gleichmässig |
| 7 | 0,8 | 220 | noch gestört |
| | 1,5 | 400 | gleichmässig |
| 8 | 0,8 | 160 | gleichmässig |
| | 1,5 | 270 | gleichmässig |

Stabilisatorgemisch A:

| Mischpolymerisat aus Beispiel | Gew.-Teile Stabilisator-gemisch | Aufdrückkraft | Zellstruktur |
|---|---|---|---|
| 9 | 1,0 | 260 | gleichmässig |
| | 1,8 | 300 | gleichmässig |
| 10 | 1,0 | 330 | noch gestört |
| | 1,8 | 450 | gleichmässig |

Die Verschäumungsergebnisse in diesen beiden Formulierungen für hochelastische Polyurethanformschäume machen deutlich, dass die erfindungsgemäss zu verwendenden Blockmischpolymerisate sowohl in reiner Form als auch in Abmischung mit Polydimethylsiloxanen hinsichtlich der Zellregulierung eine höhere Aktivität und, wie in den Werten für die Aufdrückkraft verdeutlicht, auch ein merklich breiteres Verarbeitungsspiel in bezug auf Veränderungen der Stabilisatorkonzentration aufweisen.

Weiterhin wurden die erfindungsgemäss zu verwendenden Polysiloxan-Polyoxyalkylen-Blockmischpolymerisate in den folgenden Formulierungen 3 und 4 für hochelastische Polyurethanblockschäume untersucht.

Formulierung 3:

| | | |
|---|---|---|
| Desmophen® 3900 | 75 | Gew.-Teile |
| Desmophen® 3119 | 25 | Gew.-Teile |
| Wasser | 3,5 | Gew.-Teile |
| Diethanolamin | 0,9 | Gew.-Teile |
| Triethylendiamin (33% in Propylenglykol) | 0,4 | Gew.-Teile |
| Dimethylethanolamin | 0,3 | Gew.-Teile |
| Trichlorethylphosphat | 2,0 | Gew.-Teile |
| TDI 80 | 41,3 | Gew.-Teile |

Desmophen® 3900 ist ein ausschliesslich aus Propylen- und Ethylenoxid aufgebautes Polyol der Firma Bayer AG mit ungefähr 70% primären OH-Gruppen und einem mittleren Molekulargewicht von 4800.

Formulierung 4:

| | | |
|---|---|---|
| Desmophen® 3900 | 75 | Gew.-Teile |
| Desmophen® 3119 | 25 | Gew.-Teile |
| Wasser | 2,0 | Gew.-Teile |
| Diethanolamin | 0,6 | Gew.-Teile |
| Triethylendiamin (33% in Propylenglykol) | 0,2 | Gew.-Teile |
| Bis(dimethylaminoethyl)ether (70% in Dipropylenglykol) | 0,12 | Gew.-Teile |
| Dibutylzinndilaurat | 0,15 | Gew.-Teile |
| TDI 80 | 28,6 | Gew.-Teile |

Die Schäume nach Formulierung 3 hatten Raumgewichte zwischen 26 und 28 kg/$m^3$; mit der Formulierung 4 ergaben sich Raumgewichte im Bereich von 42 bis 45 kg/$m^3$.

Die Überprüfung der erfindungsgemäss zu verwendenden Polysiloxan-Polyoxyalkylen-Blockmischpolymerisate in den Formulierungen 3 und 4 erfolgte unter Anwendung des Stabilisatorgemisches C.

Formulierung 3:

| Mischpolymerisat aus Beispiel | Gew.-Teile Stabilisatorgemisch | Aufdrückkraft | Porosität | Elastizität | Abblasen |
|---|---|---|---|---|---|
| 1 | 0,8 | 45 | 8 | 64 | gut |
| | 1,5 | 70 | 12 | 66 | gut |
| 2 | 0,8 | 65 | 20 | 62 | leicht |
| | 1,5 | 94 | 33 | 64 | leicht |
| 3 | 0,8 | 80 | 45 | 61 | leicht |
| | 1,5 | 120 | 70 | 63 | kein |
| 4 | 0,8 | 58 | 19 | 64 | leicht |
| | 1,5 | 90 | 34 | 64 | gut |
| 5 | 0,8 | 42 | 12 | 65 | gut |
| | 1,5 | 68 | 17 | 66 | gut |
| 6 | 0,8 | 63 | 18 | 64 | leicht |
| | 1,5 | 89 | 29 | 63 | leicht |
| 7 | 0,8 | 78 | 32 | 62 | leicht |
| | 1,5 | 123 | 48 | 62 | kein |
| 8 | 0,8 | 56 | 20 | 63 | leicht |
| | 1,5 | 84 | 29 | 64 | leicht |
| 9 | 0,8 | 51 | 17 | 65 | leicht |
| | 1,5 | 72 | 32 | 65 | gut |
| 10 | 0,8 | 69 | 31 | 64 | leicht |
| | 1,5 | 92 | 43 | 63 | leicht |

Formulierung: 4

| Mischpolymerisat aus Beispiel | Gew.-Teile Stabilisatorgemisch | Aufdrückkraft | Porosität | Elastizität | Abblasen |
|---|---|---|---|---|---|
| 1 | 0,6 | 22 | 6 | 65 | gut |
| | 1,2 | 34 | 8 | 66 | gut |
| 2 | 0,6 | 42 | 14 | 64 | leicht |
| | 1,2 | 68 | 18 | 64 | gut |
| 3 | 0,6 | 55 | 24 | 63 | leicht |
| | 1,2 | 90 | 37 | 61 | leicht |

Formulierung: 4 (Fortsetzung)

| Mischpolymerisat aus Beispiel | Gew.-Teile Stabilisatorgemisch | Aufdrückkraft | Porosität | Elastizität | Abblasen |
|---|---|---|---|---|---|
| 4 | 0,6 | 37 | 12 | 64 | leicht |
| | 1,2 | 59 | 22 | 63 | gut |
| 5 | 0,6 | 27 | 7 | 66 | gut |
| | 1,2 | 38 | 9 | 66 | gut |
| 6 | 0,6 | 44 | 14 | 64 | leicht |
| | 1,2 | 70 | 21 | 63 | leicht |
| 7 | 0,6 | 54 | 27 | 62 | leicht |
| | 1,2 | 84 | 45 | 62 | kein |
| 8 | 0,6 | 39 | 14 | 64 | leicht |
| | 1,2 | 66 | 24 | 64 | leicht |
| 9 | 0,6 | 42 | 12 | 64 | gut |
| | 1,2 | 63 | 14 | 65 | leicht |
| 10 | 0,6 | 58 | 27 | 62 | leicht |
| | 1,2 | 82 | 42 | 63 | kein |

Die erfindungsgemässen Polysiloxan-Polyoxyalkylen-Blockmischpolymerisate ergeben gegenüber Produkten des Standes der Technik deutlich geringere Aufdrückkräfte und bessere Porositäten. Ausserdem führen sie zu einem besseren Abblasen nach dem Aufsteigen, was ein zusätzliches Mass für die Vollständigkeit der Zellöffnung darstellt. Die Zellstruktur war mit allen Produkten ausreichend gleichmässig.

## Patentansprüche

1. Verfahren zur Herstellung hochelastischer kalthärtender Polyurethanschaumstoffe aus mindestens difunktionellen Polyisocyanaten, Polyolen mit mindestens zwei Hydroxylgruppen je Molekül, wovon im Mittel mindestens 40% hiervon primäre Hydroxylgruppen sind und das Äquivalentgewicht je Hydroxylgruppe 700 bis 3000 beträgt, Katalysatoren, Treibmitteln, Emulgatoren und Stabilisatoren sowie gegebenenfalls üblichen Zusatzmitteln, dadurch gekennzeichnet, dass man als Schaumstabilisatoren Polysiloxan-Polyoxyalkylen-Blockmischpolymerisate mit folgenden Merkmalen verwendet:

a) der Polysiloxanblock ist linear oder verzweigt und enthält im Mittel 4 bis 25 Siliciumatome, wobei die an den Siliciumatomen gebundenen organischen Reste Polyoxyalkylen- oder Methylreste sind, jedoch bis zu 30% der Methylreste durch substituierte Alkylreste mit 1 bis 4 Kohlenstoffatomen und/oder Phenylreste ersetzt sein können,

b) der Polyoxyalkylenanteil besteht aus mindestens zwei aus Oxyethylen- und Oxypropyleneinheiten gebildeten Polyoxyalkylenblöcken $A_1$ und $A_2$, wobei der Block $A_1$ aus 45 bis 100 Mol-% Oxyethyleneinheiten und 55 bis 0 Mol-2% Oxypropyleneinheiten und der Block $A_2$ aus 0 bis 50 Mol-% Oxyethyleneinheiten und 100 bis 50 Mol-% Oxypropyleneinheiten gebildet ist, das Molgewicht der Polyoxyalkylenblöcke $A_1$ und $A_2$ jeweils 150 bis 1200 und das molare Verhältnis der Blöcke $A_1$:$A_2$ = 20:80 bis 80:20 beträgt,

c) der Polysiloxanblock ist mit den Polyoxyalkylenblöcken über SiOC- oder SiC-Brücken verbunden, wobei an jedem Polysiloxanblock im Mittel 1,5 bis 10 Polyoxyalkylenblöcke gebunden sind.

2. Verfahren nach Anspruch 1, dadurch gekennzeichnet, dass der Polysiloxanblock linear ist und im Mittel 4 bis 15 Siliciumatome enthält.

3. Verfahren nach Anspruch 1 oder 2, dadurch gekennzeichnet, dass das Molgewicht der Polyoxyalkylenblöcke $A_1$ und $A_2$ jeweils 300 bis 1000 beträgt.

4. Verfahren nach einem oder mehreren der vorhergehenden Ansprüche, dadurch gekennzeichnet, dass an jedem Polysiloxanblock im Mittel 2 bis 6 Polyoxyalkylenblöcke gebunden sind.

## Claims

1. Process for preparing highly elastic cold-curing polyurethane foams from at least difunctional polyisocyanates, polyols having at least two hydroxyl groups per molecule, on average at least 40% thereof being primary hydroxyl groups and the equivalent weight per hydroxyl group being 700 to 3,000, catalysts, blowing agents, emulsifiers and stabilizers as well as, if desired, customary additives, characterized in that the foam stabilizers used are polysiloxane/polyoxyalkylene block copolymers having the following features:

a) the polysiloxane block is linear or branched and contains on average 4 to 25 silicon atoms, the organic radicals bonded to the silicon atoms being polyoxyalkylene or methyl radicals, although up to 30% of the methyl radicals can be replaced by substituted alkyl radicals having 1 to 4 carbon atoms and/or phenyl radicals, the polyoxyalkylene portion consists of

b) at least two polyoxyalkylene blocks $A_1$ and $A_2$ which are formed by oxyethylene and oxy-

propylene units, block $A_1$ being formed by 45 to 100 mol-% of oxyethylene units and 55 to 0 mol-% of oxypropylene units and block $A_2$ by 0 to 50 mol-% of oxyethylene units and 100 to 50 mol-% of oxypropylene units, the molecular weight of the polyoxyalkylene blocks $A_1$ and $A_2$ being in each case 150 to 1,200 and the molar ratio of blocks $A_1$:$A_2$ being 20:80 to 80:20,

c) the polysiloxane block is bonded to the polyoxyalkylene blocks via SiOC or SiC bridges, on average 1.5 to 10 polyoxyalkylene blocks being bonded to each polysiloxane block.

2. Process according to Claim 1, characterized in that the polysiloxane block is linear and contains on average 4 to 15 silicon atoms.

3. Process according to Claim 1 or 2, characterized in that the molecular weight of the polyoxyalkylene blocks $A_1$ and $A_2$ is in each case 300 to 1,000.

4. Process according to one or more of the preceding claims, characterized in that on average 2 to 6 polyoxyalkylene blocks are bonded to each polysiloxane block.

## Revendications

1. Procédé pour la préparation de mousses de polyuréthane à haute élasticité, durcissant à froid, à partir de polyisocyanates au moins difonctionnels, de polyols possédant au moins deux groupes hydroxyle par molécule, dont en moyenne au moins 40% sont des groupes hydroxyle primaires et dont la masse équivalente, par groupe hydroxyle, est de 700 à 3000, de catalyseurs, d'agents porogènes, d'agents émulsionnants et de stabilisants, ainsi que, éventuellement d'additifs habituels, caractérisé en ce qu'on utilise comme stabilisants de mousse des copolymères séquencés polysiloxane-polyoxyalkylène ayant les caractéristiques suivantes:

a) la séquence polysiloxane est linéaire ou ramifiée et contient en moyenne 4 à 25 atomes de silicium, les radicaux organiques liés aux atomes de silicium étant des radicaux polyoxyalkylène ou méthyle, mais jusqu'à 30% des radicaux méthyle pouvant être remplacés par des radicaux alkyle substitués ayant de 1 à 4 atomes de carbone et/ou des radicaux phényle,

b) la partie polyoxyalkylène est constituée d'au moins deux séquences polyoxyalkylènes $A_1$ et $A_2$ formées de motifs oxyéthylène et oxypropylène, la séquence $A_1$ étant constituée de 45 à 100% en moles de motifs oxyéthylène et de 55 à 0% en moles de motifs oxypropylène, et la séquence $A_2$ étant constituée de 0 à 50% en moles de motifs oxyéthylène et de 100 à 50% en moles de motifs oxypropylène, la masse moléculaire de chacune des séquences polyoxyalkylènes $A_1$ et $A_2$ étant de 150 à 1200, le rapport molaire entre les séquences $A_1$ et $A_2$ étant de 20:80 à 80:20,

c) la séquence polysiloxane est reliée aux séquences polyoxyalkylènes par l'intermédiaire de ponts SiOC ou SiC, en moyenne 1,5 à 10 séquences polyoxyalkylènes étant liées à chaque séquence polysiloxane.

2. Procédé selon la revendication 1, caractérisé en ce que la séquence polysiloxane est linéaire et contient en moyenne de 4 à 15 atomes de silicium.

3. Procédé selon la revendication 1 ou 2, caractérisé en ce que la masse moléculaire de chacune des séquences polyoxyalkylènes $A_1$ et $A_2$ est de 300 à 1000.

4. Procédé selon l'une ou plusieurs des revendications précédentes, caractérisé à ce qu'en moyenne 2 à 6 séquences polyoxyalkylènes sont liées à chaque séquence polysiloxane.